# EUROPÄISCHE PATENTSCHRIFT

(11) **EP 2 596 044 B1**
(45) Veröffentlichungstag und Bekanntmachung des Hinweises auf die Patenterteilung: **01.10.2014**
(21) Anmeldenummer: 11732477.2
(22) Anmeldetag: 18.07.2011
(51) Int. Cl.: C08G 63/00

(54) **VERFAHREN ZUR ERHÖHUNG DES MOLEKULARGEWICHTS VON POLYESTERN**
METHOD FOR INCREASING THE MOLECULAR WEIGHT OF POLYESTERS
PROCÉDÉ POUR ÉLEVER LE POIDS MOLÉCULAIRE DE POLYESTERS

(30) Priorität: 19.07.2010 EP 10169949
(43) Veröffentlichungstag der Anmeldung: 29.05.2013
(73) Patentinhaber: BASF SE, 67056 Ludwigshafen (DE)
(72) Erfinder: LOOS, Robert, 67067 Ludwigshafen (DE); SCHILLO, Simone, 67069 Ludwigshafen (DE)
(86) Internationale Anmeldenummer: PCT/EP2011/062189
(87) Internationale Veröffentlichungsnummer: WO 2012/019868

(56) Entgegenhaltungen:
- WO-A1-2006/074815
- WO-A1-2010/034711

## Beschreibung

Die vorliegende Erfindung betrifft ein Verfahren zur Molekulargewichtserhöhung von Polyestern, durch Erhitzen von 100 Teilen Polyester mit i) 0,01 bis 5 Teilen eines Tetracarbonsäuredianhydrids und ii) 0,01 bis 5 Teilen eines Epoxidgruppen-haltigen Copolymers auf Basis Styrol, Acrylsäureester und/oder Methacrylsäureester im Extruder auf 160 bis 350 °C.

WO 03/066704 beschreibt ein Epoxidgruppen-haltiges Copolymer auf Basis Styrol, Acrylsäureester und/oder Methacrylsäureester (Komponente ii) als geeigneten Kettenverlängerer für Polyester wie Polyethylenterephthalate (PET) und Polybutylenterephthalate (PBT). Bei der Rückgewinnung der Polyester werden hohe Anforderungen an die Geschwindigkeit und Effizienz der Mittel zum Molekulargewichtsaufbau gerichtet. Der alleinige Zusatz der zuvor beschriebene Komponete ii) zum Recylisat liefert nicht immer den nötigen Molekulargewichtsaufbau. Weiterhin läuft er zum Teil so langsam ab, dass er wirtschaftlich nicht interessant ist.

EP 748346 beschreibt den Einsatz von Tetracarbonsäuredianhydriden und sterisch gehinderten Hydroxyphenylalkylphosphonsäureestern zum Molekulargewichtsaufbau von Polyestern oder Polyestermischungen. Auch dieses Verfahren kann hinsichtlich seiner Effizienz noch verbessert werden.

Überraschenderweise wurde nun gefunden, dass sich die Effizienz der Komponente ii) wesentlich steigern lässt, wenn ein Tetracarbonsäuredianhydrid (Komponente i) hinzugefügt wird. Insbesondere hat es sich als vorteilhaft erwiesen, die folgende Dosierreihenfolge einzuhalten. Hierbei wird zuerst Komponente i) und direkt im Anschluss oder zeitversetzt (5 bis 600 Sekunden später) Komponente ii) zuzugeben.

Unter Polyestern werden in erster Linie Polyester wie Polyethylenterephthalate (PET) und Polybutylenterephthalate (PBT) oder Mischungen dieser Polyester mit anderen Polymeren wie PBT/PA, PBT/PS, PBT/ASA, PBT/ABS, PBT/PC, PET/PC, PET/ABS, PBT/PET/PC, PBT/PC/ABS sowie teilaromatische oder aliphatische Polyester verstanden. Insbesondere bevorzugt Ist PET, bzw. PET- und PBT-Recyclisate. Ein effizienter Molekulargewichtsaufbau ist hier besonders wichtig, um die Anwendungseigenschaften des Ausgangspolymers aufrecht erhalten zu können.

Prinzipiell kommen auch Polyester auf Basis von aliphatischen und aromatischen Dicarbonsäuren und aliphatischen Dihydroxyverbindung, sogenannte teilaromatische Polyester oder aliphatische Polyester aus aliphatischen Dicarbonsäuren und aliphatischen Diolen in Betracht. Gemeinsam ist diesen Polyestern, dass sie biologisch abbaubar nach DIN EN 13432 sind. Selbstverständlich sind auch Mischungen mehrerer solcher Polyester geeignet.

Unter teilaromatischen Polyestern sollen erfindungsgemäß auch Polyesterderivate verstanden werden wie Polyetherester, Polyesteramide oder Polyetheresteramide. Zu den geeigneten teilaromatischen Polyestern gehören lineare nicht kettenverlängerte Polyester (WO 92/09654). Bevorzugt werden kettenverlängerte und/oder verzweigte teilaromatische Polyester. Letztere sind aus WO 96/15173 bis 15176, oder der WO 98/12242 bekannt, auf die ausdrücklich Bezug genommen wird. Mischungen unterschiedlicher teilaromatischer Polyester kommen ebenso in Betracht. Interessante jüngere Entwicklungen basieren auf nachwachsenden Rohstoffen (siehe WO-A 2006/097353, WO-A 2006/097354 sowie EP 08165372.7). Insbesondere sind unter teilaromatischen Polyestern Produkte wie Ecoflex^{®} (BASF SE) und Eastar^{®} Bio, Origo-Bi^{®} (Novamont) zu verstehen.

Unter aliphatischen Polyestern werden Polyester aus aliphatischen C₂-C₁₂-Alkandiolen und aliphatischen C₄-C₃₆-Alkandicarbonsäuren wie Polybutylensuccinat (PBS), Polybutylenadipat (PBA), Polybutylensuccinatadipat (PBSA), Polybutylensuccinatsebacat (PBSSe), Polybutylensebacatadipat (PBSeA), Polybutylensebacat (PBSe) oder entsprechende Polyesteramide verstanden. Die aliphatischen Polyester werden von den Firmen Showa Highpolymers unter dem Namen Bionolle^{®} und von Mitsubishi unter dem Namen GSPIa^{®} vermarktet. Neuere Entwicklungen sind in der EP08165370.1 beschrieben.

Unter aliphatischen Polyestern werden auch cycloaliphatische Polyester insbesondere Cellulosealkylester wie Celluloseacetat, Celluloseacetatbutyrat oder Cellulosebutyrat verstanden.

Weiterhin können in das Verfahren Polyester auf Basis von Hydroxycarbonsäuren eingesetz werden. Beispielsweise kommen Polymilchsäure, Polycaprolacton oder Polyhydroxyalkanoate wie 3- PHB, 4-PHB oder PHB(V) in Frage.

Die bevorzugten Polyester weisen vor dem Molekukargewichtsaufbau in der Regel ein Molekulargewicht (Mₙ) im Bereich von 100 bis 100000, insbesondere im Bereich von 900 bis 75000 g/mol, bevorzugt im Bereich von 1000 bis 50000 g/mol und einem Schmelzpunkt im Bereich von 60 bis 300, bevorzugt im Bereich von 80 bis 150°C.

Unter Tetracabonsäuredianhydriden (Komponente i) werden insbesondere Pyromellitsäureanhydrid, 3,3',4,4'-Biphenyltetracarbonsäuredianhydrid, 3,3',4,4'-Benzophenon-tetracarbonsäuredianhydrid und 3,3',4,4'-Diphenylethertetracarbonsäuredianhydrid verstanden. Insbesondere bevorzugt ist Pyromellitsäureanhydrid.

Das Tetracabonsäuredianhydrid wird in 0,01 bis 5 Teilen, vorzugsweise 0,02 bis 1 und insbesondere bevorzugt 0,05 bis 0,5 Teilen auf 100 Teile Polyester zugegeben.

Epoxidgruppen-haltigem Copolymer auf Basis Styrol, Acrylsäureester und/oder Methacrylsäureester (Komponente ii) weisen insbesondere die folgenden Strukturmerkmale auf. Die Epoxidgruppen tragenden Einheiten sind vorzugsweise Glycidyl(meth)acrylate. Als vorteilhaft haben sich Copolymere mit einem Glycidylmethacrylat-Anteil von größer 20, besonders bevorzugt von größer 30 und insbesondere bevorzugt von größer 50 Gew.-% des Copolymers erwiesen. Das Epoxid-Äquivalentgewicht (EEW) in diesen Polymeren beträgt vorzugsweise 150 bis 3000 und insbesondere bevorzugt 200 bis 500 g/Äquivalent. Das mittlere Molekulargewicht (Gewichtsmittel) M_{w} der Polymere beträgt vorzugsweise 2000 bis 25.000, insbesondere 3000 bis 8.000. Das mittlere Molekulargewicht (Zahlenmittel) Mₙ der Polymere beträgt vorzugsweise 400 bis 6.000, insbesondere 1000 bis 4.000. Die Polydispersität (Q) liegt im Allgemeinen zwischen 1.5 und 5. Epoxidgruppen-haltige Copolymere des obengenannten Typs werden beispielsweise von der BASF Resins B.V. unter der Marke Joncryl^{®} ADR vertrieben. Als Kettenverlängerer besonders geeignet ist Joncryl^{®} ADR 4368, langkettige Acrylate wie in der EP Anm. Nr. 08166596.0 beschrieben und Cardura^{®} E10 der Fa. Shell.

Epoxidgruppen-haltige Copolymere des obengenannten Typs werden in 0,01 bis 5 Teilen, bevorzugt in 0,1 bis 2, und besonders bevorzugt in 0,2 bis 1 Teilen%, bezogen auf 100 Teile Polyester eingesetzt.

Das erfindungsgemäße Verfahren kann gegebenenfalls durch die Zugabe weiterer Zusatzstoffe noch effizienter ausgestaltet werden.

Außerdem kann es von Vorteil sein, nach Zugabe der Komponenten i) und ii) noch einen Säurefänger zuzugeben. Als Säurefänger haben sich insbesondere Verbindungen ausgewählt aus der Gruppe bestehend aus Bisoxazolin, Polyoxazolin, Carbodiimid, polymeres Carbodiimid, Dicaprolactam, polymeres Caprolactam, Bisoxazin und Polyoxazin bewährt, wie sie in der WO 2010/012695 detailliert beschrieben sind. In Bezug auf diese Verbindungen wird auf die Seiten 7, Zeile 15 bis Seite 8, Zeile 24 der WO 2010/012695 ausdrücklich verwiesen.

Die Polymermischungen können ferner die üblichen Additive enthalten. Der hier gefundene Effekt der Stabilisierung der Schmelzen von Biopolymeren durch Zugabe von Epoxidgruppen-haltigen Copolymeren wird dadurch nicht betroffen. Übliche Additiven sind beispielsweise Nukleierungsmittel wie Talkum, Kreide, Ruß, Graphit, Calcium- oder Zinkstearat, Poly-D-Milchsäure, N,N'ethylen-bis-12-hydroxystearamid, Polyglykolsäure,
Gleit- und Antiblockmittel,
Wachse,
Antistatika,
Weitere Kompatibilizer wie Silane, Maleinsäureanhydrid, Fumarsäureanhydrid, Isocyanate, Disäurechloride,
Antifog-Mittel,
UV-Stabilisatoren oder
Farbstoffe zu versehen
Füllstoffe wie Glasfasern, Stärke - mit Weichmachern wie Glycerin bzw. Sorbitol plastifiziert oder nicht plastifiziert -, Stärkederivate, Cerealien, Cellulosederivate, Talkum, Kreide, Ruß und Graphit.
Meßmethoden

Die Viskositätszahlen wurden mit einem Miko-Ubbelohde Gerät Typ: M-II bei 25°C, in Phenol/o-Dichlorbenzol 1:1 gemäß DIN EN ISO 1628 gemessen. Die Viskositätszahlen werden in cm³/g angegeben.
Kapillarkonstante: 0.09185
Meßtemperatur [°C]: 5
Lösemittel: Phenol / o-Dichlorbenzol 1:1 (PODB)
Durchlaufzeit Lösemittel [s]: 28.54
Hagenbach-Korrektur des Lösemittels [s]: 0.01
Konzentrationen: 0.5g Polymer auf 100mL Lösungsmittel

Die Schmelzeviskosität der Proben über die Zeit wurde mit einem schubspannungsgesteuerten Platte-Platte Rotationsrheometer SR2 der Firma Rheometric Scientific in Anlehnung an ISO 6721-10 bestimmt. Der Plattendurchmesser betrug 25 mm, der Plattenabstand 1 mm. Die eingestellte Schubspannung lag bei 100 Pa, die Messzeit betrug 30 min, es wurde 5 min vorgeheizt. Die Messtemperatur ist jeweils angegeben.

Der Schmelzfließindex (Melt-Volume-Rate = MVR) der Proben wurde nach ISO 1133 bestimmt.

### Eingesetzte Materialien:

### Polyester:

a) teilaromatischer Polyester der Marke Ecoflex^{®} FBX 7011 (BASF SE)
b) Polyethylenterephthalat Typ RT 51 (Fa. Kosa)
c) 120 kg 1,4-Butandiol, 91.3 kg Dimethylterepthalat und 0.2 kg Glycerin wurden mit 0.2 kg Tetrabutylorthotitanat als Katalysator unter Erhitzen und Abdestillieren des Methanols vollständig umgeestert und anschließend mit 77.5 kg Adipinsäure versetzt. Es wurde zunächst unter Normaldruck das Wasser abdestilliert und die Polykondensation dann bei bis zu 250 °C und einem Endvakuum < 10 mbar für 1.5 h vervollständigt bevor das Polymer als Strang granuliert wurde. Der aliphatisch-aromatische Polyester hatte eine Säurezahl von 1.2 und einer Viskositätszahl von 84.

### Komponente i):

### i-1) Pyromellitsäuredianhydrid der Fa. Aldrich

### Komponente ii):

### ii-1) Joncryl^{®} ADR 4368 der Fa. BASF Resins B.V.

Die Versuche wurden an einem DSM Xplore 15 Mikro Compounder Model 2005 durchgeführt. Während der Messung wird die Kraft (in Newton) aufgezeichnet, die die Polymerschmelze auf die Bodenplatte ausübt. Diese Kraft ist proportional zur Viskosität der Schmelze, so dass sich Änderungen der Schmelzeviskosität direkt online beobachten und aufzeichnen lassen.

### Beispiel 1:

20 g des Polyesters a) wurden bei 240°C aufgeschmolzen. Nach Zugabe von 0.2 g Komponente i-1 konnte kein Anstieg der Viskosität beobachtet werden. Nach 30 Sekunden wurden 0.2 g Komponente ii-1 zudosiert. Nach Zugabe von ii-1 wurde ein starker Anstieg der Viskosität von 2600 auf 6000 N innerhalb von ca. 4 Minuten beobachtet. Die Reaktionsmischung wurde während des ganzen Versuchs auf 240°C gehalten.

### Beispiel 2:

20 g des Polyesters c) wurden bei 240°C aufgeschmolzen. Nach Zugabe von 0.2 g Komponente i-1 konnte kein Anstieg der Viskosität beobachtet werden. Nach 3 Minuten wurden 0.2 g Komponente ii-1 zudosiert. Nach Zugabe von ii-1 wurde ein starker Anstieg der Viskosität von 200 auf 1300 N innerhalb von ca. 4 Minuten beobachtet.

### Beispiel 3:

20 g des Polyesters c) wurden bei 240°C aufgeschmolzen. Nach Zugabe von 0.2 g Komponente i-1 konnte kein Anstieg der Viskosität beobachtet werden. Nach 3 Minuten wurden 0.4 g Komponente ii-1 zudosiert. Nach Zugabe von ii-1 wurde ein starker Anstieg der Viskosität von 200 auf 3500 N innerhalb von ca. 4 Minuten beobachtet.

### Vergleichsbeispiel 4:

20 g des Polyesters a) wurden bei 240°C aufgeschmolzen. Nach Zugabe von 0.2 g Komponente i-1 wurde während 15 Minuten ein Abfall der Viskosität beobachtet.

### Vergleichsbeispiel 5:

20 g des Polyesters a) wurden bei 240°C aufgeschmolzen. Die Zugabe von 0.2 g Komponente ii-1 erfolgte nach 1 Minute. Die Schmelze zeigte während 15 Minuten nur einen langsamen Anstieg der Viskosität von 3600 auf 4000 N.

### Beispiel 6:

20 g des Polyesters b) wurden bei 280°C aufgeschmolzen. Nach Zugabe von 0.06 g Komponente i-1 konnte kein Anstieg der Viskosität beobachtet werden. Nach 30 Sekunden wurden 0.1 g Komponente ii-1 zudosiert. Nach Zugabe von ii-1 wurde ein starker Anstieg der Viskosität von 1800 auf 5400 N innerhalb von ca. 4 Minuten beobachtet.

### Vergleichsbeispiel 7:

20 g des Polyesters b) wurden bei 280°C aufgeschmolzen. Nach Zugabe von 0.06 g Komponente i-1 wurde während 15 Minuten ein Abfall der Viskosität beobachtet.

### Vergleichsbeispiel 8:

20 g des Polyesters a) wurden bei 240°C aufgeschmolzen. Die Zugabe von 0.1 g Komponente ii-1 erfolgte nach 1 Minute. Die Schmelze zeigte während 15 Minuten nur einen langsamen Anstieg der Viskosität von 1800 auf 2300 N.

Die Vergleichsversuche 4 und 7 zeigen eindrucksvoll, dass die alleinige Zugabe von Pyromellitsäuredianhydrid (Komponente i) zu einem Molekulargewichtsabbau anstelle eines Aufbaus führt. Gemäß Vergleichsversuchen 5 und 8 bewirkt die alleinige Zugabe von Komponente ii) allenfalls einen geringen Molekulargewichtsaufbau. Die erfindungsgemäßen Beispiele zeigen, dass die kombinierte Zugabe der Komponenten i) und ii) einen raschen und effizienten Molekulargewichtsaufbau bewirkt.

## Patentansprüche

1. Verfahren zur Molekulargewichtserhöhung von Polyestern, durch Erhitzen von 100 Teilen Polyester mit i) 0,01 bis 5 Teilen eines Tetracarbonsäuredianhydrids und ii) 0,01 bis 5 Teilen eines Epoxidgruppen-haltigen Copolymers auf Basis Styrol, Acrylsäureester und/oder Methacrylsäureester im Extruder auf 160 bis 350 °C.

2. Verfahren nach Anspruch 1, **dadurch gekennzeichnet, dass** die Komponente ii) zeitlich nach der Komponente i) zugegeben wird.

3. Verfahren nach Anspruch 1, **dadurch gekennzeichnet, dass** der Polyester ein Polyethylenterephthalat ist.

4. Verfahren nach Anspruch 1, **dadurch gekennzeichnet, dass** der Polyester ein aliphatischer oder aliphatisch-aromatischer Polyester oder eine Polymermischung dieser Polyester ist.

5. Verfahren nach Anspruch 1, **dadurch gekennzeichnet, dass** das Tetracarbonsäuredianhydrid Pyromellitsäureanhydrid ist.

6. Verfahren nach Anspruch 1, **dadurch gekennzeichnet, dass** das Epoxidgruppen-haltige Copolymer als Epoxidbaustein ein Glycidylacrylat oder Glycidylmethacrylat enthält.

7. Verfahren nach Anspruch 1, **dadurch gekennzeichnet, dass** das Epoxidgruppen-haltige Copolymer ein Epoxid-Äquivalentgewicht von 150 bis 3000 g/Äquivalent aufweist.

## Claims

1. A process for increasing the molecular weight of polyesters via heating, to from 160 to 350°C, in an extruder, of 100 parts of polyester with i) from 0.01 to 5 parts of a tetracarboxylic dianhydride and ii) from 0.01 to 5 parts of a copolymer which contains epoxy groups and which is based on styrene, acrylate, and/or methacrylate.

2. The process according to claim 1, wherein addition of component ii) occurs after addition of component i).

3. The process according to claim 1, wherein the polyester is a polyethylene terephthalate.

4. The process according to claim 1, wherein the polyester is an aliphatic or aliphatic-aromatic polyester or a polymer mixture of said polyesters.

5. The process according to claim 1, wherein the tetracarboxylic dianhydride is pyromellitic anhydride.

6. The process according to claim 1, wherein the copolymer containing epoxy groups comprises, as epoxy unit, a glycidyl acrylate or glycidyl methacrylate.

7. The process according to claim 1, wherein the epoxy equivalent weight of the copolymer containing epoxy groups is from 150 to 3000 g/equivalent.

## Revendications

1. Procédé pour élever le poids moléculaire de polyesters, par chauffage de 100 parties de polyester avec i) 0,01 à 5 parties d'un dianhydride d'acide tétracarboxylique et ii) 0,01 à 5 parties d'un copolymère contenant des groupes époxyde à base de styrène, d'un ester de l'acide acrylique et/ou d'un ester de l'acide méthacrylique dans une extrudeuse à une température de 160 à 350 °C.

2. Procédé selon la revendication 1, **caractérisé en ce que** le composant ii) est ajouté temporellement après le composant i).

3. Procédé selon la revendication 1, **caractérisé en ce que** le polyester est un polyéthylène téréphtalate.

4. Procédé selon la revendication 1, **caractérisé en ce que** le polyester est un polyester aliphatique ou aliphatique-aromatique ou un mélange de polymères de ces polyesters.

5. Procédé selon la revendication 1, **caractérisé en ce que** le dianhydride d'acide tétracarboxylique est l'anhydride de l'acide pyroméllitique.

6. Procédé selon la revendication 1, **caractérisé en ce que** le copolymère contenant des groupes époxyde contient en tant que constituant époxyde un acrylate de glycidyle ou un méthacrylate de glycidyle.

7. Procédé selon la revendication 1, **caractérisé en ce que** le copolymère contenant des groupes époxyde présente un poids équivalent d'époxyde de 150 à 3 000 g/équivalent.
